# EUROPÄISCHE PATENTSCHRIFT

(11) **EP 1 279 803 B1**
(45) Veröffentlichungstag und Bekanntmachung des Hinweises auf die Patenterteilung: **15.03.2006**
(21) Anmeldenummer: 02013047.2
(22) Anmeldetag: 13.06.2002
(51) Int. Cl.: F02D 9/18, F02B 29/08

(54) **Verschlussorgan, insbesondere für den Saugkanal einer Brennkraftmaschine**
Closure member, suitable for the intake pipe of an internal combustion engine
Organe obturateur, approprié pour le conduit d'admission d'un moteur à combustion interne

(30) Priorität: 28.07.2001 DE 10136935
(43) Veröffentlichungstag der Anmeldung: 29.01.2003
(73) Patentinhaber: Mann + Hummel GmbH, 71638 Ludwigsburg (DE)
(72) Erfinder: Linhart, Jochen, 71332 Waiblingen (DE); Fasold, Michael, 71397 Leutenbach (DE)
(74) Vertreter: Voth, Gerhard

(56) Entgegenhaltungen:
- DE-A- 2 601 310
- DE-C- 661 159
- DE-C- 4 315 715
- GB-A- 950 670
- US-A- 2 598 208
- US-A- 3 011 518

## Beschreibung

### Stand der Technik

Die Erfindung betrifft ein Verschlussorgan für einen durchflossenen Querschnitt, insbesondere den Saugkanal einer Brennkraftmaschine, wobei der Verschluss durch Lamellen erfolgt, nach dem Oberbegriff des Patentanspruches 1.

Die Verwendung von Verschlussorganen für die Saugkanäle von Brennkraftmaschinen ist allgemein bekannt. Für Brennkraftmaschinen ergibt sich eine besonders anspruchsvolle Verwendung für Klappen, wenn eine sogenannte Impulsaufladung erreicht werden soll. Zu diesem Zweck müssen schnell schaltende Klappen zur Realisierung kürzester Schaltzeiten eingesetzt werden. Entsprechend thermodynamisch angestellter Berechnungen sind hierbei Schaltzeiten von 2 ms zu verwirklichen. Aber auch bei anderen Anwendungen, beispielsweise in der Luft- und Raumfahrttechnik oder der Verfahrenstechnik, können schnell schaltende Klappen gefordert werden.

Die kurzen Schaltzeiten für die lmpulsaufladung von Brennkraftmaschinen ist notwendig, da das Schaltverhalten der Klappe an den Aufladungsprozess für die Zylinder angepasst werden muss, welcher direkt abhängig von den Ventilöffnungszeiten des Einlassventils des Zylinders ist. Unter der Impulsaufladung versteht man ein Verfahren, bei dem der Einlasskanal mittels einer Klappe stromaufwärts des Einlassventils des Zylinders zeitweilig verschlossen wird, so dass sich beim Ansaughub des Kolbens bei offenem Einlassventil stromabwärts der Klappe ein Unterdruck einstellt. Wenn die Klappe bei vorhandenem Unterdruck geöffnet wird, beschleunigt der Unterdruck die freigegebene Ladungssäule an Ansaugluft hinter der Klappe, wodurch diese mit hohem Impuls in den Brennraum einströmt und dort eine größere Füllung bewirkt. Dieses Verfahren ist beispielsweise in DE 199 08 435 A1 beschrieben.

Dieses Dokument stellt zur Verwirklichung dieses Verfahrens einen Klappenmechanismus vor, der in Schließrichtung vorgespannt ist, wodurch ein Verschluss der Klappe mit Hilfe eines Elektromagneten erfolgen kann. Geöffnet wird die Klappe aufgrund des Unterdrucks, der zwischen der Klappe und dem Einlassventil entsteht, in dem Bereich des Saugkanals, der als Speicherkanal bezeichnet wird.

Die beschriebene Schaltvorrichtung ist jedoch kompliziert im Aufbau und daher störanfällig. Außerdem kann der Klappenmechanismus nicht aktiv geöffnet werden, sondern wird durch den entstehenden Unterdruck aufgerissen. Hierdurch läßt sich kein genauer Schaltzeitpunkt erreichen, wodurch eine hinreichende Prozesssicherheit der Impulsaufladung nicht gewährleistet werden kann.

Das Verfahren der Impulsaufladung ist weiterhin in DE 197 54 287 A1 beschrieben. Der Figur 2, im Zusammenhang mit den entsprechenden Passagen der Beschreibung, läßt sich entnehmen, dass die zusätzliche Schaltklappe im Saugkanal für unterschiedliche Verfahren verwendet werden kann. Der Vorgang der Impulsaufladung entspricht der mit dem Bezugszeichen 11 versehenen Strategie des späten Einlassöffnens und frühen Einlassschließens. Es wird deutlich, dass zur Durchführung dieses Verfahrens extrem kurze Schaltzeiten notwendig sind, die durch die entsprechenden Rampen der Ventilhebungskurve 11 zum Ausdruck kommen. Im Vergleich hierzu sind im selben Schaubild die Ventilhebungskurven 6, 7 von Einlass- und Auslassventil dargestellt.

Zur schnellen Schaltung der Ventile wird im genannten Dokument weiterhin eine Vielzahl von Antriebsmechanismen dargestellt, die hauptsächlich auf elektromagnetischen Aktuatoren bzw. deren Kombination mit Federelementen beruhen. Diese ermöglichen ein enorm schnelles Reagieren, wodurch die im Dokument nicht näher ausgeführten Klappenmechanismen betätigt werden können. Als Klappenmechanismen werden sowohl Schieber als auch Drehklappen verwendet, wobei deren Anbindung an die elektromechanischen Aktuatoren nicht näher dargestellt sind.

Die gewöhnlichen Schaltklappen gemäß dem Stand der Technik sind jedoch auf die hohen Schaltgeschwindigkeiten, die sich mit den dargestellten Antrieben verwirklichen lassen, nicht ausgelegt. Hierbei entsteht im allgemeinen eine zu hohe Lagerreibung, so dass sich die geforderte Zahl an Schaltzyklen nicht ohne einen übermäßigen Verschleiß erreichen läßt. Außerdem führen die Schaltkräfte zu einer Verformung der Klappe, weswegen die geforderte Dichtheit im geschlossenen Zustand nicht in befriedigender Weise erreicht werden kann.

Es ist weiterhin bekannt, dass sich die auftretenden Schalt- und Lagerkräfte dadurch minimieren lassen, dass die Masse und damit die Trägheit der bewegten Teile möglichst klein gehalten wird. Dies läßt sich beispielsweise durch die Konzipierung des Verschlussorgans als Lamellenklappe erreichen, wie dies beispielsweise in DE 43 08 545 A1 vorgeschlagen wird. Im Verhältnis zum Gesamtquerschnitt des zu verschließenden Kanals müssen bei einer Lamellenklappe die einzelnen bewegten Bauteile lediglich um einen geringen Betrag verstellt werden, um bereits zu einem vollständigen Abschluss des gesamten Querschnitts zu führen.

Jedoch sind Lamellenklappen sehr kompliziert im Aufbau, wodurch ein hoher konstruktiver Aufwand verbunden mit hohen Fertigungskosten entsteht. Außerdem ist die Mechanik von Lamellenklappen anfällig, da ein komplizierter mechanischer Ansteuerungsmechanismus geschaffen werden muss. Die einzelnen Lagerkräfte sind zwar geringer, dafür tritt jedoch ein mehrfaches an Lagerstellen auf, da jede einzelne Lamelle gelagert werden muss. Damit steigt auch die Wahrscheinlichkeit, dass durch Versagen einer Lagerstelle die gesamte Vorrichtung in ihrer Funktion beeinträchtigt wird.

In den Dokument DE 43 15 715 C 1 ist eine Vorrichtung zum dichten Absperren eines fluiddurchströmten Kanals offenbart. Die Vorrichtung verfügt über schlauchförmige Hohlkörper, welche mit einer Druckquelle verbunden sind. Zum Verschließen des Kanals werden die Hohlkörper mit einem Überdruck beaufschlagt, wodurch sie dichtend aneinander anliegen und den Kanal fluiddicht abdichten. Wird ein Unterdruck in die Hohlkörper eingeleitet, so legen sich die Hohlkörper an-Stützprofile an, wodurch der Kanal von einem Fluid durchströmt werden kann.

Aufgabe der Erfindung ist es, ein Verschlussorgan zu schaffen, welches bei Realisierung geringer Schaltkräfte zuverlässig in der Funktion ist. Diese Aufgabe wird durch die Merkmale des Patentanspruches 1 gelöst.

### Vorteile der Erfindung

Das erfindungsgemäße Verschlussorgan weist in bekannter Weise einen durch mehrere Lamellen verschließbaren durchflossenen Querschnitt auf. Die Lamellen bilden in ihrer Gemeinsamkeit einen Schaltmechanismus in dem Sinne, dass durch Einbringung einer Schaltkraft durch einen Aktuator über eine an dem Schaltmechanismus angebrachte Anbindung der Schaltmechanismus verschlossen und geöffnet werden kann. Selbstverständlich sind auch Zwischenstellungen denkbar, so dass der Schaltmechanismus als Drosselorgan verwendet werden kann. Das Verschlussorgan kann im weiteren Sinne auch derart ausgestaltet werden, dass lediglich eine Drosselung, jedoch nicht ein vollständiger Verschluss des Schaltmechanismus möglich ist.

Das erfindungsgemäße Verschlussorgan ist dadurch gekennzeichnet, dass die Lamellen in ihrer Längsausrichtung unveränderlich im durchflossenen Querschnitt angeordnet sind. Dies bedeutet, dass die Lamellen nicht durch eine Drehbewegung relativ zueinander bewegt werden, was zu einer Änderung der Längsausrichtung führen würde, sondern dass die Lamellen in ihrem Profil, insbesondere in ihrer Höhe veränderlich sind, wodurch zwischen den Lamellen gebildete Schlitze erweitert oder verengt werden können. Zu diesem Zweck sind die Lamellen zumindest bereichsweise elastisch ausgeführt, wodurch die Höhenveränderung erreicht werden kann. Dabei werden die Lamellen elastisch verformt, weswegen sich eine Drehung der Lamellen zum Zwecke des Verschlusses des Schaltmechanismus erübrigt.

Die Gestaltung des erfindungsgemäßen Verschlussorgans bringt eine Reihe von Vorteilen. Das System ist extrem verschleißarm, da es keine drehenden Teile gibt, die in geeigneter Weise gelagert werden müssen. Dies ist insbesondere bei schnell schaltenden Klappen von Bedeutung, bei denen die Lagerstellen in besonderer Weise belastet werden. Durch die Anzahl der Lamellen kann weiterhin der vom Aktuator zur Höhenveränderung der Lamellen notwendige Hub beeinflusst werden. Bei einer größeren Anzahl von Lamellen kann dieser extrem klein gewählt werden, wodurch das Erfordernis an die extrem kurzen Schaltzeiten von unter 2 ms realisiert werden können. Die während der Schaltung auftretenden Trägheitskräfte können durch die kurzen Schaltwege jedenfalls kleingehalten werden, da bei einem kleinen Hub der Aktuator weniger stark beschleunigt werden muss, als dies bei einem großen Hub der Fall wäre.

Ein weiterer Vorteil ist, dass auf einen Rückstellmechanismus verzichtet werden kann, wenn die Elastizität der Lamelle genutzt wird, um diese in die Grundstellung zurückzuführen. Als Grundstellung ist vorteilhafterweise die Lamelle im geöffneten Zustand zu wählen, so dass der Aktuator die Lamellen hin zu einem geschlossenen Zustand verformt, wodurch Rückstellkräfte aufgrund der elastischen Verformung entstehen.

Die Elastizität der Dehnlamellen führt gleichzeitig zu einer geringen Geräuschentwicklung während des Schaltvorgangs. Wenn die benachbarten Lamellen aufeinander treffen, kann durch die Elastizität des Werkstoffen der Stoß gedämpft werden. Außerdem kann ein Klappern aufgrund von Erschütterungen des Verschlussorgans vermieden werden, da keine drehenden Bauteile mit den zwangsläufig auftretenden Lagerpassungen verwendet werden müssen.

Gemäß einer vorteilhaften Ausgestaltung der Erfindung sind die Lamellen mit ihren Enden dichtend mit der Seitenwand des durchflossenen Querschnittes verbunden. Auf diese Weise kann eine zusätzliche Abdichtung der Lamellenenden eingespart werden, wodurch die Zuverlässigkeit des Schaltmechanismus zusätzlich verbessert wird. Bei der Gestaltung der Verbindung zwischen den Enden der Lamellen und der Seitenwand wird bewußt die Elastizität der Membran genutzt. Diese ermöglicht eine Befestigung der Lamellen an der Seitenwand in der Art, dass benachbarte Lamellen zumindest im Bereich ihrer Enden aneinander stoßen. Ausgehend von der Wand öffnet sich im geöffneten Zustand der Lamellen der zwischen ihnen vorgesehene Spalt dann kontinuierlich zum Kanalinneren hin. Werden die benachbarten Lamellen zum Zwecke des Verschlusses dann aufeinander zubewegt, so schließt sich automatisch der Spalt bis hin zur Seitenwand, wo die eingangs beschriebene Einspannung für einen dichten Verschluss sorgt. Auf diese Weise kann auf eine Dichtung verzichtet werden, welche bei Ausdehnung der Lamellen entlang der Seitenwand schert. Hieraus ergibt sich eine alternative Ausführungsform, wobei die Elastizität der sich ausdehnenden Bereiche der Lamellen gleichzeitig zur Abdichtung gegenüber den Seitenwänden genutzt werden könnte. Allerdings kann mit der eingangs beschriebenen Variante das Auftreten einer Reibung zwischen Lamellen und Kanalwänden vollständig vermieden werden. Dies minimiert auch den Verschleiß, zu dem die Dichtheitsanforderungen durch eine Einspannung der Lamellen in die Seitenwand die Zuverlässigkeit verbessert wird.

Weiterhin vorteilhaft ist die Verwendung eines Seitenrahmens, in den die Lamellen eingebunden sind. Der Seitenrahmen wird dann in die Seitenwand eingebettet, so dass diese einen Bestandteil derselben bildet. Auf diese Weise kann der Schaltmechanismus mit den Lamellen jederzeit ausgewechselt werden, sofern ein Schaden aufgetreten ist. Außerdem läßt sich der Schaltmechanismus als Standardbauteil fertigen und in verschiedene Systeme einbauen. Dabei kann auch auf eine optimale Werkstoffwahl hinsichtlich der Verbindung zwischen Seitenrahmen und Lamellen geachtet werden.

Die Verbindung der Lamellenenden mit dem Seitenrahmen bzw. der Seitenwand kann mittels aller bekannten Verbindungsverfahren erfolgen. Es ist beispielsweise ein Verkleben oder ein Verschweißen denkbar. Weiterhin kann die elastische Haut der Lamellen über eine Klemmverbindung mit dem Seitenrahmen verbunden werden, indem in der Wand Aussparungen zur Aufnahme der elastischen Lamellenhäute vorgesehen sind, die mit einer Art Stopfen versehen werden, zwischen dem und der Seitenwand die Lamellenhaut eingeklemmt wird. Hierbei kommen die Stopfen als zusätzliche Befestigungselemente zum Einsatz. Auch ist die Herstellung des Rahmens mit den Lamellen einteilig beispielsweise im Spritzgussverfahren denkbar. Hierbei kann auch ein Mehrkomponentenverfahren angewendet werden, so dass in dem einzigen Bauteil unterschiedliche Werkstsoffeigenschaften in einzelnen Bereichen möglich werden.

Bei einem mehrteiligen Aufbau der Lamellen ist es vorteilhaft, zumindest an der Anströmkante einen Stützkörper vorzusehen, wodurch das Profil der Lamelle verstärkt wird. Hierbei ist zu bemerken, dass die Lamellen in ihrer Längsausrichtung immer im durchströmten Querschnitt stehen, so dass deren Ausbildung mit einem strömungsgünstigen Profil besonders vorteilhaft ist. Dieses Profil kann bei großem Mengendurchsatz an zu förderndem Fluid mittels des Stützkörpers stabilisiert werden, wodurch die ansonsten elastische Lamelle einen genügenden Widerstand der Strömung entgegensetzt. Eine vorteilhafte Ausbildung des Stützkörpers ist eine von der einen Seitenwand zur anderen Seitenwand sich erstreckende Sprosse, um die der elastische Körper, der die Lamelle bildet, geschlungen sein kann. Der elastische Körper kann beispielsweise aus einer Art Schlauch bestehen und entsprechend der Breite des durchflossenen Querschnitts abgelängt werden. Die Abströmkante kann dabei ebenfalls durch eine Sprosse gebildet werden. Die Sprossen können einen kreisförmigen Querschnitt aufweisen, jedoch auch einen beliebigen anderen, der zu einem günstigeren Strömungsprofil in den Lamellen führt.

Für einen mechanischen Aktuator, wie er beispielsweise in DE 197 54 287 beschrieben ist, also einen schnell schaltenden Linearmotor, kann ein Betätigungselement geschaffen werden, was einer Sprossenleiter ähnlich sieht. Dieses Betätigungselement weist Leitersprossen auf, die durch das Innere der Lamellen verlaufen. Durch eine lineare Bewegung des so gestalteten Betätigungselementes werden daher die Lamellen im rechten Winkel zu deren Längsausrichtung gedehnt, wodurch die zwischen den Lamellen befindlichen Schlitze verengt werden. Besonders vorteilhaft ist dabei eine Anordnung zweier gegenläufig beweglicher Betätigungselemente, wodurch die Lamellen in beide Richtungen gedehnt werden. Dabei können die Betätigungselemente derart angeordnet werden, dass sie die Flächenpressung zwischen den Lamellenhäuten jeweils benachbarter Lamellen vergrößern. Dadurch läßt sich eine stärkere Abdichtung der Lamellen im geschlossenen Zustand des Schaltmechanismus erreichen. Dabei kommen jeweils benachbarte Lamellen zum Anschlag. Alternativ hierzu können auch Anschläge realisiert werden, die den durchströmten Querschnitt parallel zu den Lamellen durchlaufen, etwa Leitbleche, welche jeweils zwischen zwei Lamellen angeordnet sind.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigen
- Figur 1: den erfindungsgemäßen Schaltmechanismus in einem teilweise aufgeschnittenen Gehäuse in perspektivischer Ansicht,
- Figur 2: den erfindungsgemäßen Schaltmechanismus gemäß Figur 1 im zusammengefügten Zustand in perspektivischer Ansicht,
- Figur 3: schematisch das Profil der Lamellen gemäß Figur 1 im geöffneten Zustand,
- Figur 4: schematisch das Profil der Lamellen gemäß Figur 1 im geschlossenen Zustand,
- Figur 5: schematisch das Lamellenprofil bei Verwendung nur eines Betätigungselementes gemäß Figur 1 und
- Figur 6: schematisch ein Saugrohr mit der erfindungsgemäßen Stelleinrichtung, welches an einen Zylinderkopf einer Brennkraftmaschine angeschlossen ist im Schnitt.

### Beschreibung der Ausführungsbeispiele

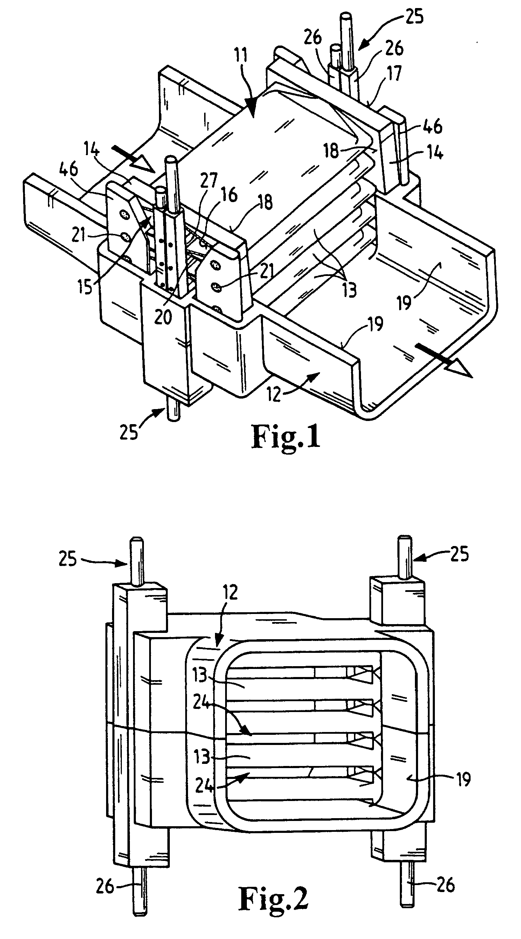

Ein Schaltmechanismus 11 gemäß Figur 1 ist in einen Rohrabschnitt 12 als durchflossenem Querschnitt eingebracht. Dieser Schaltmechanismus besteht aus Lamellen 13, die in einen Seitenrahmen 14 dichtend eingeklebt sind. Zu diesem Zweck weist der Seitenrahmen 14 Aufnahmeschlitze 15 auf, welche in ihrem Profil dem Profil der Lamellen im geschossenen Zustand entsprechen, d. h. dass sich im Seitenrahmen 14 die benachbarten Lamellen wenigstens in einem Punkt berühren. Enden 16 der Lamellen reichen dabei bis zur äußeren Seite 17 der Seitenrahmen, während innere Seiten der Seitenrahmen einen Teil der Seitenwand 19 des Rohrabschnittes 12 bilden.

Die einzelnen Lamellen 13 sind gebildet aus einer Schlauchwand 20, die zwischen zwei Stützkörpern 21 eingespannt ist, d. h. dass die Stützkörper 21 eine Anströmkante 22 und eine Abströmkante 23 bilden. Die Stützkörper 21 sind an ihren Enden jeweils in Versteifungsrahmen 46 zusammen gefaßt und die parallel zu den Seitenrahmen 14 in den Rohrabschnitt 12 eingesetzt werden. Wie Figur 2 zu entnehmen ist, bilden sich zwischen den abgestützten Lamellen 13 Kanäle 24, die als effektiver Querschnitt der Strömung zur Verfügung stehen. Zum Rand hin verengen sich die Kanäle 24 wegen der Befestigung der Schlauchwände 20 in den Aufnahmeschlitzen 15 der beiden Seitenrahmen 14. Im Bereich der inneren Seite 18 berühren sich die Schlauchwände 20 jeweils benachbarter Lamellen 13.

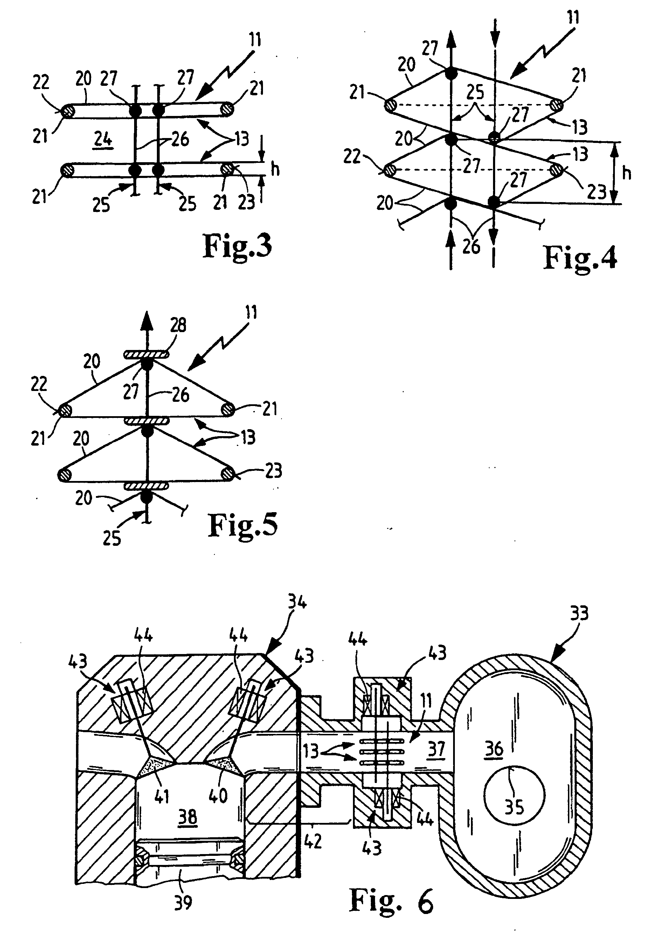

Als Anbindung der Lamellen an einen nicht dargestellten Aktuator dienen Betätigungselemente 25, deren Betätigungsstangen 26 aus dem Rohrabschnitt herausragen. An diese kann der nicht dargestellte Aktuator angeschlossen werden (vergleiche z. B. Figur 6).

Der genaue Aufbau der Betätigungselemente 25 läßt sich der Figur 1 entnehmen. Diese bilden eine Art Sprossenleiter, wobei die Betätigungsstangen 26 als Seitenstreben der Sprossenleiter zu verstehen ist. Weiterhin sind Leitersprossen vorgesehen, die die durch die Schlauchwände gebildeten Hohlräume der Lamellen 13 längs durchlaufen, so dass sie sich quer durch den Rohrabschnitt von Seitenwand 19 zu Seitenwand 19 erstrecken. Von diesen Betätigungselementen 25 sind zwei parallel angeordnet, welche gegenläufig bewegt werden können. Hierdurch läßt sich der durch die Lamellen eingenommene Querschnitt im rechten Winkel zur Längsausrichtung derselben ausdehnen.

Den Figuren 3 und 4 läßt sich die Funktion der Lamellen gemäß der Figuren 1 und 2 entnehmen. Diese sind schematisch dargestellt im voll geöffneten Zustand (Figur 3) und im voll geschlossenen Zustand (Figur 4). Zu erkennen sind jeweils die Schlauchwände 20, die zwischen den anströmseitigen und abströmseitigen Stützkörpern 21 eingespannt sind. Im voll geöffneten Zustand befinden sich die Betätigungselemente 25 in einer Lage, dass die Leitersprossen 27 in einer Ebene liegen, welche gleichzeitig durch die Stützkörper 21 läuft. Damit weisen die Lamellen ihre geringste mögliche Höhe h auf.

Zum Verschluss des Schaltmechanismus können die Lamellen durch gegenläufiges Bewegen der Betätigungselemente 25 entsprechend der angedeuteten Pfeile gedehnt werden, so dass sich die Höhe h vergrößert. Dabei werden die Schlauchwände 20 zwischen den benachbarten Leitersprossen 27 der beiden parallel angeordneten Betätigungselemente 25 derart eingeklemmt, dass sich eine längere Strecke ergibt, über die die jeweils benachbarten Schlauchwände zur Anlage kommen. Hierdurch läßt sich die Dichtwirkung des geschlossenen Schaltmechanismus vergrößern. Weiterhin fällt auf, dass zur Erzeugung des beschriebenen Verschlusses der Lamellen die beiden Betätigungsstangen nur um h/2 (h aus Figur 4) verschoben werden müssen, da sich die beiden Betätigungselemente 25 gegenläufig bewegen. Hierdurch lassen sich die Schaltzeiten noch einmal stark verkürzen.

In Figur 5 ist eine Variante dargestellt, in der nur ein Betätigungselement 25 zur Anwendung kommt. Dieses bewegt die Schlauchwände 20 gegen Anschlagrippen 28, welche ebenfalls im Strömungsweg parallel zur Längenausrichtung der Lamellen 13 angeordnet sind.

Zuletzt ist in Figur 6 ein Anwendungsbeispiel für den Schaltmechanismus 11 dargestellt. Dieser ist in eine Ansaugvorrichtung 33 eingebaut, welche für eine Brennkraftmaschine Zuletzt ist in Figur 7 ein Anwendungsbeispiel für den Schaltmechanismus 11 dargestellt. Dieser ist in eine Ansaugvorrichtung 33 eingebaut, welche für eine Brennkraftmaschine 34 vorgesehen ist. Die Ansaugvorrichtung transportiert die Ansaugluft von einem Einlass 35 über einen Sammelraum 36 und Saugkanäle 37 in einen Zylinder 38, der von einem Kolben 39 sowie einem Einlassventil 40 und einem Auslassventil 41 abgeschlossen ist. Das Einlassventil bildet zusammen mit dem Schaltmechanismus 11 einen Speicherkanal 42, der zur Impulsaufladung der Brennkraftmaschine genutzt werden kann. Dabei kommen als Aktuator Linearantriebe 43 zum Einsatz, die über elektrische Spulen 44 gesteuert werden. Diese Linearantriebe werden sowohl für den Schaltmechanismus 11 wie auch das Auslass- und Einlassventil 40, 41 verwendet. Der Schaltmechanismus 11 ist lediglich angedeutet und im wesentlichen wie der in Figur 1 dargestellte aufgebaut.

## Patentansprüche

1. Verschtussorgan für einen durchflossenen Querschnitt (13), insbesondere für einen Saugkanal einer Brennkraftmaschine, mit einem durch Lamellen (13) gebildeten Schaltmechanismus (11) und einer an diesem angebrachten Anbindung für einen Aktuator (43), wobei die Lamellen (13) in ihrer Längsausrichtung unveränderlich im durchflossenen Querschnitt angeordnet sind und derart elastisch ausgeführt sind, dass durch Betätigung des Schaltmechanismus (11) die Höhe (h) der Lamellen, gemessen rechtwinkelig zur Längsausrichtung derselben, veränderbar ist, wodurch der durchflossene Querschnitt verengt und erweitert werden kann, **dadurch gekennzeichnet, dass** die Anbindung aus mindestens einem sprossenleiterartigen Betätigungselement (25) besteht, welches im wesentlichen rechtwinkelig zur Längsausrichtung der Lamellen bewegbar angeordnet ist, wobei die Leitersprossen (27) im Inneren der Lamellen verlaufen, und wobei das Betätigungselement (25) linear bewegbar ist.

2. Verschlussorgan nach Anspruch 1, **dadurch gekennzeichnet, dass** die Lamellen (13) mit ihren Enden (16) dichtend mit einer Seitenwand (19) des durchflossenen Querschnitts (13) verbunden sind.

3. Verschlussorgan nach Anspruch 2 **dadurch gekennzeichnet, dass** die Lamellen an den Enden (16) mit einem Seitenrahmen (14) verbunden sind, welcher einen Bestandteil der Seitenwand (19) bildet.

4. Verschlussorgan nach einem der vorherigen Ansprüche, **dadurch gekennzeichnet, dass** die Lamellen zumindest an einer Anströmkante (22) durch einen Stützkörper (21) verstärkt sind.

5. Verschlussorgan nach Anspruch 4, **dadurch gekennzeichnet, dass** der Stützkörper (21) aus einer Sprosse besteht, welche sich zwischen den Seitenwänden (19) des durchflossenen Querschnitts erstreckt.

6. Verschlussorgan nach einem der vorherigen Ansprüche, **dadurch gekennzeichnet, dass** zwei gegenläufig bewegliche und bezüglich der Längsausrichtung der Lamellen (13) versetzt angeordnete Betätigungsvorrichtungen vorgesehen sind.

7. Verschlussorgan nach einem der vorherigen Ansprüche, **dadurch gekennzeichnet, dass** Lamellen (13) im geschlossenen Zustand mit den jeweils benachbarten Lamellen in Anschlag gebracht werden können.

8. Verschlussorgan nach Anspruch 7, **dadurch gekennzeichnet, dass** sich die jeweils benachbarten Lamellen (13) im Bereich der Seitenwand (13) des durchflossenen Querschnitts an deren Enden (16) zumindest in einem Punkt berühren.

## Claims

1. Closing member for a traversed cross-section (13), more especially for an intake duct of an internal combustion engine, said closing member including a switching mechanism (11) formed by lamellae (13) and a connection for an actuator (43) mounted on said switching mechanism, wherein the lamellae (13) are disposed in the traversed cross-section so as to be invariable in their longitudinal extension and are configured so as to be resilient in such a manner that by actuating the switching mechanism (11) the height (h) of the lamellae (13), measured at right angles to the longitudinal alignment of the same, is variable, it thereby being possible to widen and narrow the traversed cross-section, **characterised in that** the connection comprises at least one actuating member (25) in the shape of a rung ladder, which is disposed so as to be displaceable substantially at right angles to the longitudinal alignment of the lamellae, wherein the ladder rungs (27) extend in the interior of the lamellae, and wherein the actuating member (25) is linearly displaceable.

2. Closing member according to claim 1, **characterised in that** the lamellae (13) with their ends (16) are sealingly connected to a side wall (19) of the traversed cross-section (13).

3. Closing member according to claim 2, **characterised in that** the lamellae at the ends (16) are connected to a side frame (14), which forms a component part of the side wall (19).

4. Closing member according to one of the preceding claims, **characterised in that** the lamellae are reinforced at least at one inflow edge (22) by means of a supporting body (21).

5. Closing member according to claim 4, **characterised in that** the supporting body (21) comprises a rung, which extends between the side walls (19) of the traversed cross-section.

6. Closing member according to one of the preceding claims, **characterised in that** two actuating devices are provided, said actuating devices being displaceable in opposite directions and disposed offset with regard to the longitudinal alignment of the lamellae (13).

7. Closing member according to one of the preceding claims, **characterised in that** lamellae (13) in the closed state can be moved to abut against the respectively adjacent lamellae.

8. Closing member according to claim 7, **characterised in that** the respectively adjacent lamellae (13) contact each other in the region of a side wall (13) of the traversed cross-section at their ends (16) at least at one point.

## Revendications

1. Organe obturateur pour une section transversale (13) traversée par un fluide, en particulier pour un canal d'admission d'un moteur à combustion interne, comprenant un mécanisme de commutation (11) formé par des lamelles (13) et une liaison fixée à celui-ci pour un actionneur (43), les lamelles (13) ayant leur orientation longitudinale invariable dans la section transversale traversée par un fluide, et étant élastiques pour que l'actionnement du mécanisme de commutation (11) modifie la hauteur (h) des lamelles mesurée perpendiculairement à l'orientation longitudinale de celles-ci, ce qui permet de rétrécir et d'élargir la section transversale traversée par un fluide,
**caractérisé en ce que**
la liaison se compose d'au moins un élément d'actionnement (25) en forme d'échelle, mobile pour l'essentiel perpendiculairement à l'orientation longitudinale des lamelles, les échelons (27) s'étendant à l'intérieur des lamelles et l'élément d'actionnement (25) étant linéairement mobile.

2. Organe obturateur selon la revendication 1,
**caractérisé en ce que**
les lamelles (13) ont leurs extrémités (16), reliées de façon étanche à une paroi latérale (19) de la section transversale (13) traversée par un fluide.

3. Organe obturateur selon la revendication 2,
**caractérisé en ce que**
les lamelles sont reliées aux extrémités (16) à un cadre latéral (14) qui forme un composant de la paroi latérale (19).

4. Organe obturateur selon l'une des revendications précédentes,
**caractérisé en ce que**
les lamelles sont renforcées par un corps de soutien (21) au moins au niveau d'une arête d'entrée (22).

5. Organe obturateur selon la revendication 4,
**caractérisé en ce que**
le corps de soutien (21) se compose d'un échelon qui s'étend entre les parois latérales (19) de la section transversale traversée par un fluide.

6. Organe obturateur selon l'une des revendications précédentes,
**caractérisé en ce que**
deux dispositifs d'actionnement mobiles sont en opposition et décalés par rapport à l'orientation longitudinale des lamelles (13).

7. Organe obturateur selon l'une des revendications précédentes,
**caractérisé en ce que**
des lamelles (13), à l'état fermé, peuvent être amenées en butée avec les lamelles voisines respectives.

8. Organe obturateur selon la revendication 7,
**caractérisé en ce que**
les lamelles (13) voisines respectives se touchent au moins en un point au niveau de leurs extrémités (16) dans la zone de la paroi latérale (13) de la section transversale traversée par un fluide.
